# EUROPÄISCHE PATENTSCHRIFT

(11) **EP 1 370 532 B1**
(45) Veröffentlichungstag und Bekanntmachung des Hinweises auf die Patenterteilung: **17.05.2006**
(21) Anmeldenummer: 02735134.5
(22) Anmeldetag: 15.03.2002
(51) Int. Cl.: C07D 215/04, C07F 17/00

(54) **VERFAHREN ZUR HERSTELLUNG VON SUBSTITUIERTEN CYCLOPENTADIENVERBINDUNGEN**
METHOD FOR PRODUCING CYCLOPENTADIENE COMPOUNDS
PROCEDE POUR LA PRODUCTION DE COMPOSES CYCLOPENTADIENE SUBSTITUES

(30) Priorität: 20.03.2001 DE 10113930
(43) Veröffentlichungstag der Anmeldung: 17.12.2003
(73) Patentinhaber: Basell Polyolefine GmbH, 50389 Wesseling (DE)
(72) Erfinder: MIHAN, Shahram, 67061 Ludwigshafen (DE); ENDERS, Markus, 69123 Heidelberg (DE); KOHL, Gerald, 68219 Mannheim (DE)
(86) Internationale Anmeldenummer: PCT/EP2002/002924
(87) Internationale Veröffentlichungsnummer: WO 2002/074745

(56) Entgegenhaltungen:
- WO-A-97/42158

## Beschreibung

Gegenstand der vorliegenden Erfindung ist ein Verfahren zur Herstellung von substituierten Cyclopentadienverbindungen.

Zur Herstellung von substituierten Cyclopentadienverbindungen sind verschiedene Verfahren bekannt. Eine Vielzahl von substituierten Cyclopentadienverbindungen werden durch Addition vom Metallalkylen an ein Cyclopenten-1-on oder 1-Indanon Derivat dargestellt. Als Nebenreaktion werden die Cyclopenten-1-one und 1-Indanone häufig deprotoniert, was in der Folge zu dimeren Kondensationsprodukten führt. Diese Kondensationsprodukte müssen dann in einem Reinigungsschritt abgetrennt werden. Das gereinigte Additionsprodukt wird anschliessend üblicherweise zum gewünschten Cyclopentadien dehydratisiert. Die Dehydratisierung erfordert je nach Additionsprodukt Bedingungen, unter denen das entstehende substituierte Cyclopentadien dimerisiert und dann in einem anschliessenden Schritt wieder gecrackt werden muss. Diese Synthese ist aufwendig und führt oftmals nur in geringen Ausbeuten zu den substituierten Cyclopentadienverbindungen.

Bei sehr sperrigen Substituenten, die weniger nucleophil und mehr basisch reagieren, beobachtet man bevorzugt die Deprotonierung der Cyclopenten-1-one und 1-Indanone. So wurden zur Darstellung von Cyclopentadienverbindungen mit sperrigen Substituenten Dilithioferrocenverbindungen genutzt, an welche man Elektrophile addiert. Dies führt in der Regel jedoch zu 1,1'- und 1-substituierten Ferrocenen. Die Cyclopentadienverbindungen können dann in der Folge beispielsweise mit elementarem Lithium direkt zu Lithiumcyclopentadienylverbindungen abgespalten werden, welche z.B. direkt in der Synthese von Metallocenen verwendbar sind. Durch die unvollständige Reaktion mit den Elektrophilen ist jedoch auch das unsubstituierte Ausgangscyclopentadien enthalten, so dass auch hier in der Regel eine Aufreingung erfolgt.

Aufgabe der vorliegenden Erfindung bestand nun darin ein Verfahren zur Herstellung von substituierten Cyclopentadienverbindungen zu finden, das einfach durchführbar ist, selektiv zu den substituierten Cyclopentadienylverbindungen führt und besonders auch für die Einführung sterisch anspruchsvoller Reste geeignet ist.

Demgemäß wurden Verfahren zur Herstellung von substituierten Cyclopentadienverbindungen gefunden, dadurch gekennzeichnet dass, es folgende Schritte beinhaltet:
(A) Umsetzung einer Verbindung der Formel I 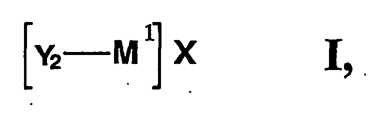 in der die Substituenten folgende Bedeutung haben:
   - M¹: Co, Rh oder Ir
   - X: Fluor, Chlor, Brom, Iod, Trifluorosulfonyl, Tosyl
   - Y: gleich oder verschieden ist und durch folgende allgemeine Formel II 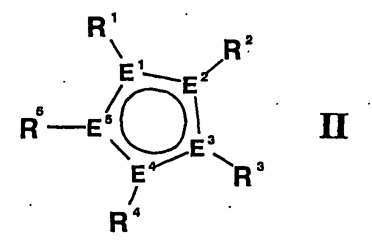
   beschrieben ist, worin die Variablen folgende Bedeutung besitzen:
   - E¹-E⁵: Kohlenstoff oder maximal ein E¹ bis E⁵ Phosphor
   - R¹-R⁵: unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest, ein Trialkylsilyl mit drei voneinander unabhängigen C₁-C₂₀-Alkyl Gruppen, wobei die organischen Reste R¹-R⁵ auch durch Halogene, Stickstoff-, Phosphor-, Schwefel- oder Sauerstoffhaltige Gruppen substituiert sein können und je zwei geminale oder vicinale Reste R¹-R⁵ auch zu einem fünf- oder sechsgliedrigen Ring verbunden sein können,
   mit einer Verbindung M²XₙR⁶_{n-z},
   wobei die Variablen die folgende Bedeutung besitzen:
   - R⁶: C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest, ein Trialkylsilyl mit drei voneinander unabhängigen C₁-C₂₀-Alkyl Gruppen, oder ein unsubstituiertes, substituiertes oder kondensiertes, partiell ungesättigtes heterocyclisches oder heteroaromatisches. Ringsystem, wobei der organische Rest R⁶ auch durch Halogene, Schwefel-, Phosphor-, Stickstoff- oder Sauerstoffhaltige Gruppen substituiert sein kann,
   - M²: Li, Na, K, Mg, Al, B
   - n: 0, 1 oder 2 und kleiner z ist
   - z: eine ganze Zahl die der Oxidationsstufe von M² entspricht
   und
(B) Umsetzung des so erhaltenen Zwischenproduktes mit Eisen(III)chlorid

Der Cyclopentadienylring Y in Y₂-M¹ kann auch ein Heterocyclopentadienyl Ligand sein, d.h. dass mindestens ein C-Atom auch durch ein Heteroatom aus der Gruppe 15 oder 16 ersetzt sein kann. In diesem Fall ist bevorzugt ein C₅-Ring-Kohlenstoffatom durch. Phosphor ersetzt. Bevorzugt sind alle E¹-E⁵ Kohlenstoff.

Als organische Reste R¹-R⁶ kommen beispielsweise folgende in Betracht: C₁-C₂₀-Alkyl, wobei das Alkyl linear oder verzweigt sein kann, wie z.B. Methyl, Ethyl, n-Propyl, iso-Propyl, n-Butyl, iso-Butyl, tert.-Butyl, n-Pentyl, n-Hexyl, n-Heptyl, n-Octyl, n-Nonyl, n-Decyl oder n-Dodecyl, 5- bis 7-gliedriges Cycloalkyl, das seinerseits eine C₆-C₁₀-Arylgruppe als Substituent tragen kann, wie z.B. Cyclopropan, Cyclobutan, Cyclopentan, Cyclohexan, Cycloheptan, Cyclooctan, Cyclononan oder Cyclododekan, C₂-C₂₀-Alkenyl, wobei das Alkenyl linear, cyclisch oder verzweigt sein kann und die Doppelbindung intern oder endständig sein kann, wie z.B. Vinyl, 1-Allyl, 2-Allyl, 3-Allyl, Butenyl, Pentenyl, Hexenyl, Cyclopentenyl, Cyclohexenyl, Cyclooctenyl oder Cyclooktadienyl, C₆-C₂₀-Aryl, wobei der Arylrest durch weitere Alkylgruppen substituiert sein kann, wie z.B. Phenyl, Naphthyl, Biphenyl, Anthranyl, o-, m-, p-Methylphenyl, 2,3-, 2,4-, 2,5-, oder 2,6-Dimethylphenyl, 2,3,4-, 2,3,5-, 2,3,6-, 2,4,5-, 2,4,6- oder 3,4,5-Trimethylphenyl, oder Arylalkyl, wobei das Arylalkyl durch weitere Alkylgruppen substituiert sein kann, wie z.B. Benzyl, o-, m-, p-Methylbenzyl, 1- oder 2-Ethylphenyl. In den Trialkylsilyl Resten eignen sich unabhängig voneinander die gleichen C₁-C₂₀-Alkyl-Gruppen, wie oben für R¹-R⁶ näher ausgeführt, wobei gegebenenfalls auch zwei Alkylreste zu einem 5- oder 6-gliedrigen Ring verbunden sein können, beispielsweise Trimethylsilyl, Triethylsilyl, Butyldimethylsilyl oder Tributylsilyl. Die organischen Reste R¹-R⁶ können auch durch Halogene, wie z.B. Fluor, Chlor, Brom oder Jod ,Stickstoff-, Phosphor-, Schwefel- oder Sauerstoffhaltige Gruppen, wie z.B. =NR, -NR₂, =PR, PR₂, -SR, =S, -OR oder =O substituiert sein, wobei R ein C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest oder ein Trialkylsilyl mit drei voneinander unabhängigen C₁-C₂₀-Alkyl Gruppen bedeutet, wie für R¹-R⁶ näher ausgeführt.

Je zwei geminale oder vicinale Reste R¹-R⁵ können auch zu einem fünf- oder sechsgliedrigen Ring verbunden sein, wie z.B. Tetrahydroindenyl, Indenyl, Benzindenyl oder Fluorenyl und die fünf oder sechsgliedrigen Ringe können auch heteroaromatisch sein, wie z.B. 7-Cyclopentathiophen, 7-Cyclopentadipyrrol, 7-Cyclopentadiphosphol, Thiapentalene, 2-Methylthiapentalene, Azapentalen, Oxapentalen, Borapentalen oder Phosphapentalen.

Bevorzugt Reste R¹-R⁵ sind Wasserstoff, Methyl, Ethyl, n-Propyl, iso-Propyl, n-Butyl, iso-Butyl, tert.-Butyl, n-Pentyl, n-Hexyl, n-Heptyl, n-Octyl, Vinyl, Allyl, Benzyl, Phenyl, Naphthyl, Biphenyl und Anthranyl. Als Si-organische Substituenten kommen besonders Trialkylsilyl-Gruppen mit 1 bis 10 C-Atomen im Alkylrest in Betracht, insbesondere Trimethylsilyl-Gruppen. Die so eingesetzten Cyclopentadienylsysteme sind teilweise im Handel erhältlich.

Um die substituierten Cyclopentadienverbindungen für die Synthese von Metallocenen nutzen zu können, ist es oftmals üblich sie mit einer starken Base zu deprotonieren und das so erhaltenen Cyclopenatdienylanion beispielsweise mit einem Übergangsmetallhalogenid umzusetzen. Für diese Methode ist es günstig, wenn mindestens ein R¹-R⁵ ein Wasserstoffatom ist.

Diese Methode ist besonders vorteilhaft für Ausgangsverbindungen mit einfachen und billigen Y-Systemen. Besonders bevorzugte Reste R¹-R⁵ sind daher Wasserstoff, Methyl oder zwei vicinale vinylische Gruppen, welche zusammen ein aromatisches Sechsringsystem bilden, insbesondere sind R¹-R³ Wasserstoff und R⁴ und R⁵ bilden zusammen ein kondensiertes aromatisches Ringsystem, so dass Y ein Indenyl ist.

Ein besonders einfaches und kostengünstiges Y-System ist unsubstituiertes Cyclopentadienyl und damit auch besonders bevorzugt, wobei alle Reste R¹-R⁵ Wasserstoff sind.

Die beiden Y können gleich oder verschieden sein. Bei zwei verschiedenen Y ist dies nur sinnvoll, wenn R⁶ mit einer Selektivität über 90% bevorzugt mit einem der Y reagiert. Bevorzugt sind beide Y gleich, insbesondere bei preiswerten und einfach zugänglichen Y.

X ist bevorzugt Chlor, Brom oder Jod und insbesondere Jod.

In dem Verfahren werden die kationischen Y₂-M¹ Verbindungen verwendet. Besonders gut geeignet sind Y₂-Co Verbindungen und insbesondere mit X gleich Jod. Insbesondere ist Bis(cyclopentadienyl)cobaltjodid geeignet.

R⁶ kann auch ein unsubstituiertes, substituiertes oder kondensiertes, heterocyclisches aromatisches Ringsystem darstellen, welches neben Kohlenstoffringgliedern Heteroatome aus der Gruppe Sauerstoff, Schwefel, Stickstoff und Phosphor enthalten kann. Beispiele für 5-Ring Heteroarylgruppen, welche neben Kohlenstoffatomen ein bis vier Stickstoffatome oder ein bis drei stickstoffatome und/oder ein Schwefel- oder Sauerstoffatom als Ringglieder enthalten können, sind 2-Furyl, 2-Thienyl, 2-Pyrrolyl, 3-Isoxazolyl, 5-Isoxazolyl, 3-Isothiazolyl, 5-Isothiazolyl, 1-Pyrazolyl, 3-Pyrazolyl, 5-Pyrazolyl, 2-Oxazolyl, 4-Oxazolyl, 5-Oxazolyl, 2-Thiazolyl, 4-Thiazolyl, 5-Thiazolyl, 2-Imidazolyl, 4-Imidazolyl, 5-Imidazolyl, 1,2,4-Oxadiazol-3-yl, 1,2,4-Oxadiazol-5-yl, 1,3,4-Oxadiazol-2-yl oder 1,2,4-Triazol-3-yl. Beispiele für 6-gliedrige Heteroarylgruppen, welche ein bis vier Stickstoffatome und/oder ein Phosphoratom enthalten können, sind 2-Pyridinyl, 2-Phosphabenzolyl 3-Pyridazinyl, 2-Pyrimidinyl, 4-Pyrimidinyl, 2-Pyrazinyl, 1,3,5-Triazin-2-yl und 1,2,4-Triazin-3-yl, 1,2,4-Triazin-5-yl oder 1,2,4-Triazin-6-yl. Die 5-Ring und 6-Ring Heteroarylgruppen können hierbei auch durch C₁-C₁₀-Alkyl, C₆-C₁₀-Aryl, Alkylaryl mit 1 bis 10 C-Atomen im Alkylrest und 6-10 C-Atomen im Arylrest, Trialkylsilyl oder Halogenen, wie Fluor, Chlor oder Brom substituiert oder mit ein oder mehreren Aromaten oder Heteroaromaten kondensiert sein. Beispiele für benzokondensierte 5-gliedrige Heteroarylgruppen sind 2-Indolyl, 7-Indolyl, 2-Cumaronyl, 7-Cumaronyl, 2-Thionaphthenyl, 7-Thionaphthenyl, 3-Indazolyl, 7-Indazolyl, 2-Benzimidazolyl oder 7-Benzimidazolyl. Beispiele für benzokondensierte 6-gliedrige Heteroarylgruppen sind 2-Chinolyl, 8-Chinolyl, 3-Cinnolyl, 8-Cinnolyl, 1-Phthalazyl, 2-Chinazolyl, 4-Chinazolyl, 8-Chinazolyl, 5-Chinoxalyl, 4-Acridyl, 1-Phenanthridyl oder 1-Phenazyl. Bezeichnung und Nummerierung der Heterocyclen wurde aus L.Fieser und M. Fieser, Lehrbuch der organischen Chemie, 3. neubearbeitete Auflage, Verlag Chemie, Weinheim 1957 entnommen.

Das erfindungsgemässe Verfahren liefert auch für sperrige Reste R⁶ sehr gute Ausbeuten. In einer bevorzugten Ausführungsform ist R⁶ Naphthyl, Biphenyl, Anthranyl, o-, m-, p-Methylphenyl, 2,3-, 2,4-, 2,5-, oder 2,6-Dimethylphenyl, 2,3,4-, 2,3,5-, 2,3,6-, 2,4,5-, 2,4,6- oder 3,4,5-Trimethylphenyl, Benzyl, o-, m-, p-Methylbenzyl, 1- oder 2-Ethylphenyl oder ein unsubstituiertes, substituiertes oder kondensiertes, heteroaromatisches Ringsystem. Besonders bevorzugt ist R⁶ ein unsubstituierter oder substituierter 8-(Chinolyl)Rest.

Besonders gut geeignet zur Addition an Y sind Lithiumverbindungen, wobei M² gleich Li ist. Insbesondere eignen sich die Lithiumverbindungen der bevorzugten und besonders bevorzugten R⁶.

Die Umsetzung A) kann bei Temperaturen von -100 bis 50°C durchgeführt werden. Bevorzugt wird die Reaktion bei Temperaturen von -90 bis 20°C, insbesondere von -90 bis -50°C durchgeführt. Als Lösungsmittel sind aprotische Lösungsmittel geeignet, in denen M²XₙR⁶_{n-z} eine gute Löslichkeit besitzt. Geeignete Lösungsmittel sind beispielsweise Ether wie z.B., Diethylether, Dibutylether, Tetrahydrofuran, glyme oder diglyme, aromatische Kohlenwasserstoffe wie Toluol oder Xylol oder Kohlenwasserstoffe, wie z.B. Pentan, Hexan, Heptan oder Oktan und Mischungen der verschiedenen Lösungsmittel. Besonders gut geeignet ist Tetrahydrofuran, und Gemische aus Tetrahydrofuran und Hexan.

Y₂M¹X wird mit M²XₙR⁶_{n-z} umgesetzt, wobei das molare Verhältnis von Y (Moläquivalente, bezogen auf Y gesamt, ungeachtet ob diese gleich oder verschieden sind) zu R⁶ von 1:0,1 bis 1:5, bevorzugt von 1:0,4 bis 1:1, und besonders bevorzugt von 1:0,45 bis 1:0,55 ist.

Die Umsetzung B) kann bei Temperaturen von -100 bis 50°C durchgeführt werden. Bevorzugt wird die Reaktion bei Temperaturen von -90 bis 20°C, insbesondere von -80 bis -50°C durchgeführt. Als Lösungsmittel sind aprotische Lösungsmittel geeignet, in denen M²XₙR⁶_{n-z} eine gute Löslichkeit besitzt. Geeignete Lösungsmittel sind beispielsweise Ether wie z.B. Diethylether, Dibutylether, Tetrahydrofuran, glyme oder diglyme, aromatische Kohlenwasserstoffe wie Toluol oder Xylol oder Kohlenwasserstoffe, wie z.B. Pentan, Hexan, Heptan oder Oktan und Mischungen der verschiedenen Lösungsmittel. Besonders gut geeignet ist Tetrahydrofuran, und Gemische aus Tetrahydrofuran und Toluol.

Das Zwischenprodukt aus A) wird mit Eisen(III)chlorid umgesetzt, welches bevorzugt wasserfrei ist, wobei das molare Verhältnis von Fe zu in A) eingesetztem M¹ von 1:0,5 bis 1:5, bevorzugt von 1:1 bis 1:5, und besonders bevorzugt von 1:2 bis 1:3 ist.

Mit dem erfindungsgemässen Verfahren lassen sich substituierte Cyclopentadienverbindungen sauber und in guten Ausbeuten herstellen. Diese können in der Folge zur Synthese von Metallocenen verwendet werden. Insbesondere substituierte Cyclopentadiensysteme, welche zur Dimerisierung neigen, können bei tiefen Temperaturen durch das Eisen(III)chlorid freigesetzt und bei diesen Temperaturen weiter umgesetzt, beispielsweise deprotoniert werden. Bevorzugte Cyclopentadienylsysteme sind z.B., 1-(8-Chinolyl)cyclopentadien, 1-(1-Naphthyl)cyclopentadien oder 1-(8-(2-Methylchinolyl))cyclopentadien.

Die folgenden Beispiele erläutern die Erfindung:

Alle Arbeiten wurden, falls nicht anders vermerkt, unter Luft- und Feuchtigkeitsausschluß durchgeführt. Toluol und THF wurden über eine Molekularsiebsäule oder Natrium/Benzophenon getrocknet und abdestilliert.

Nachfolgend genannte Ausgangsverbindungen wurden nach den zitierten Literaturvorschriften dargestellt:
- 8-Bromchinolin
   a) J. Mirek, Roczniki Chem. 1960, 34, 1599-1606;

### Analytik

NMR-Proben wurden unter Inertgas abgefüllt und gegebenenfalls eingeschmolzen. Als interner Standard dienten in den ¹H- und ¹³C-NMR-Spektren die Lösungsmittelsignale, deren chemische Verschiebung auf TMS umgerechnet wurde. NMR-Messungen wurden an einem Bruker AC 200 und, insbesondere COSY-Experimente, an einem Bruker AC 300 durchgeführt.

Massenspektren wurden an einem VG Micromass 7070 H und einem Finnigan MAT 8230 gemessen. Hochaufgelöste Massenspektren wurden an den Geräten Jeol JMS-700 und VG ZAB 2F gemessen.

### Beispiel 1

### Darstellung von 8-Chinolylcyclopentadien

In einem 250 ml Schlenkkolben wurden 6,63 g 8-Bromchinolin (31.8 mmol) in 100 ml THF gelöst und bei -90 °C 12,8 ml n-Buthyllithium-Lösung (32 mmol, 2,5 M in Hexan) zugetropft. Nach 15 Minuten Rühren wurde die dunkle Reaktionslösung mittels einer Transferkanüle zu einer auf -90 °C gekühlten Suspension von 10 g Cobalticiniumiodid (31,6 mmol) in 200 ml THF getropft. Die entstandene rote Lösung wurde über Nacht auf Raumtemperatur erwärmt, anschliessend mit wenig Aluminiumoxid (neutral) versetzt und das Lösungsmittel im Vakuum entfernt. Anschließend wurde das Rohprodukt säulenchromatographisch an Aluminiumoxid (neutral) mit Toluol filtriert. Nach Abdestillieren des Lösungsmittels erhielt man 8,15 g Chinolylcyclopentadien)(η5-cyclopentadienyl)-cobalt(I) (25,7 mmol, 81%) als roten Feststoff.
1H-NMR: (CDCl3, 200 MHz) δ = 3.16 (pq, 2H, Cp-CH); 4.87-4.93 (m, 6H, C5H5 und Chinolin-Cp-CH); (pt, 2H, Cp-CH); 5.29 (pt, 2H, Cp-CH); 7.06-7.12 (m, 1H, H⁷); 7.30-7.40 (m, 2H, H³ und H⁶); 7.54 (dd, ³*J* (H⁵,H⁶) = 8.1 Hz, ⁴*J* (H⁵,H⁷) = 1.5 Hz, 1H, H⁵); 8.04 (dd, ³*J* (H⁴, H³) 8.3 = Hz, ⁴*J* (H⁴, H²) = 1.9 Hz, 1H, H⁴); 8.94 (dd, ³*J* (H²,H³) = 4.2 Hz, ⁴*J* (H², H⁴) = 1.8 Hz, 1H, H²).
EI-MS: m/z (%) = 317 (M+, 10); 251 (M+ -CpH, 100).

In einem Schlenkkolben wurden 2,05 g η4-(8-Chinolylcyclopentadien)(η5-cyclopentadienyl)cobalt(I) (6,46 mmol) in einer Mischungaus 50 ml Toluol und 50 ml THF gelöst und auf -78 °C gekühlt. Hierzu wurde über eine Transferkanüle eine gleichtemperierte Lösung von 2,57 g wasserfreiem Eisen(III)chlorid (15,8 mmol) in 80 ml THF getropft. Die erhaltene Reaktionsmischung wurde 1 h bei dieser Temperatur gerührt und anschließend bei -30 °C über Aluminiumoxid (neutral) (30 cm, Ø 2 cm, Toluol) in einen auf -78. °C gekühlten 500 ml Schlenkkolben mit filtriert. Das so erhaltene 8-Chinolylcyclopentadien kann ohne weitere Aufarbeitung beispielsweise mit Natriumhydrid aromatisiert werden. Nach Abziehen des Lösungsmittels wurde 8-Chinolylcyclopentadien quantitativ isoliert.

## Patentansprüche

1. Verfahren zur Herstellung von substituierten Cyclopentadienverbindungen, **dadurch gekennzeichnet dass**, es folgende Schritte beinhaltet:
(A) Umsetzung einer Verbindung der Formel I 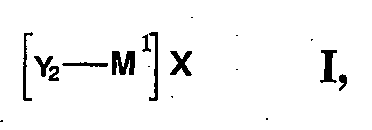 in der die Substituenten folgende Bedeutung haben:
M¹ Co, Rh oder Ir
X Fluor, Chlor, Brom, Iod, Trifluorosulfonyl, Tosyl
Y gleich oder verschieden ist und durch folgende allgemeine Formel II 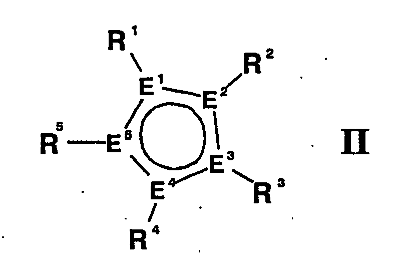
beschrieben ist, worin die Variablen folgende Bedeutung besitzen:
E¹-E⁵ Kohlenstoff oder maximal ein E¹ bis E⁵ Phosphor
R¹-R⁵ unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest, ein Trialkylsilyl mit drei voneinander unabhängigen C₁-C₂₀-Alkyl Gruppen, wobei die organischen Reste R¹-R⁵ auch durch Halogene, Stickstoff-, Phosphor-, Schwefel- oder Sauerstoffhaltige Gruppen substituiert sein können und je zwei geminale oder vicinale Reste R¹-R⁵ auch zu einem fünf- oder sechsgliedrigen Ring verbunden sein können,
mit einer Verbindung M²XₙR⁶_{n-z},
wobei die Variablen die folgende Bedeutung besitzen:
R⁶ C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest, ein Trialkylsilyl mit drei voneinander unabhängigen C₁-C₂₀-Alkyl Gruppen, oder ein unsubstituiertes, substituiertes oder kondensiertes, partiell ungesättigtes heterocyclisches oder heteroaromatisches Ringsystem, wobei der organische Rest R⁶ auch durch Halogene, Schwefel-, Phosphor-, Stickstoff- oder Sauerstoffhaltige Gruppen substituiert sein kann,
M² Li, Na, K, Mg, Al, B
n 0, 1 oder 2 und kleiner z ist
z eine ganze Zahl die der Oxidationsstufe von M² entspricht
und
(B) Umsetzung des so erhaltenen Zwischenproduktes mit Eisen(III)chlorid.

2. Verfahren zur Herstellung von substituierten Cyclopentadienverbindungen nach Anspruch 1, **dadurch gekennzeichnet dass**, M¹ Co ist.

3. Verfahren zur Herstellung von substituierten Cyclopentadienverbindungen nach Anspruch 1 oder 2, **dadurch gekennzeichnet dass**, beide Y gleich sind.

4. Verfahren zur Herstellung von substituierten Cyclopentadienverbindungen nach einem der Ansprüche 1 bis 3, **dadurch gekennzeichnet dass**, mindestens ein Rest R¹-R⁵ Wasserstoff ist.

5. Verfahren zur Herstellung von substituierten Cyclopentadienverbindungen nach einem der Ansprüche 1 bis 4, **dadurch gekennzeichnet dass**, alle Reste R¹-R⁵ Wasserstoff sind.

6. Verfahren zur Herstellung von substituierten Cyclopentadienverbindungen nach einem der Ansprüche 1 bis 4, **dadurch gekennzeichnet dass**, R¹-R³ Wasserstoff sind und R⁴ und R⁵ zusammen ein kondensiertes aromatisches Ringsystem bilden.

7. Verfahren zur Herstellung von substituierten Cyclopentadienverbindungen nach einem der Ansprüche 1 bis 6, **dadurch gekennzeichnet dass**, M² gleich Li ist.

8. Verfahren zur Herstellung von substituierten Cyclopentadienverbindungen nach einem der Ansprüche 1 bis 7, **dadurch gekennzeichnet dass**, R⁶ ein unsubstituiertes, substituiertes oder kondensiertes, heteroaromatisches Ringsystem ist.

9. Verfahren zur Herstellung von substituierten Cyclopentadienverbindungen nach einem der Ansprüche 1 bis 7, **dadurch gekennzeichnet dass**, R⁶ ein unsubstituiertes oder substituiertes 8-(Chinolyl)System ist.

## Claims

1. A process for preparing substituted cyclopentadiene compounds, which comprises the following steps:
(A) reacting a compound of the formula I 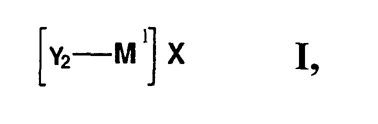 where the substituents have the following meanings:
M¹ is Co, Rh or Ir,
X is fluorine, chlorine, bromine, iodine, trifluorosulfonyl, tosyl,
Y are identical or different and each have the formula II 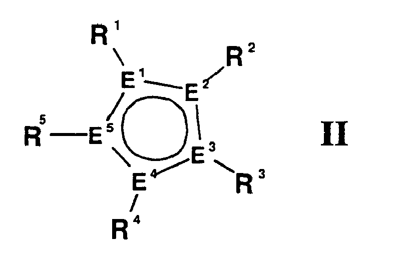
where the variables have the following meanings:
E¹-E⁵ are each carbon or at most one E¹ to E⁵ is phosphorus,
R¹-R⁵ are each, independently of one another, hydrogen, C₂-C₂₀-alkyl, C₂-C₂₀-alkenyl, C₆-C₂₀-aryl, alkylaryl having from 1 to 10 carbon atoms in the alkyl part and 6-20 carbon atoms in the aryl part, trialkylsilyl having three independent C₁-C₂₀-alkyl groups, where the organic radicals R¹-R⁵ may also be substituted by halogens and/or nitrogen-, phosphorus-, sulfur- or oxygen-containing groups and two geminal or vicinal radicals R¹-R⁵ may also be joined to form a five- or six-membered ring,
with a compound M²XₙR⁶_{n-z},
where the variables have the following meanings:
R⁶ is C₁-C₂₀-alkyl, C₂-C₂₀-alkenyl, C₆-C₂₀-aryl, alkylaryl having from 1 to 10 carbon atoms in the alkyl part and 6-20 carbon atoms in the aryl part, trialkylsilyl having three independent C₁-C₂₀-alkyl groups or an unsubstituted, substituted or fused, partially unsaturated heterocyclic or heteroaromatic ring system, where the organic radical R⁶ may also be substituted by halogens and/or sulfur-, phosphorus, nitrogen- or oxygen-containing groups,
M² is Li, Na, K, Mg, A1, B,
n is 0, 1 or 2 and is less than z,
z is an integer corresponding to the oxidation state of M²,
and
(B) reacting the intermediate obtained in this way with iron(III) chloride.

2. The process for preparing substituted cyclopentadiene compounds according to claim 1, wherein M¹ is Co.

3. The process for preparing substituted cyclopentadiene compounds according to claim 1 or 2, wherein the two groups Y are identical.

4. The process for preparing substituted cyclopentadiene compounds according to any of claims 1 to 3, wherein at least one radical R¹-R⁵ is hydrogen.

5. The process for preparing substituted cyclopentadiene compounds according to any of claims 1 to 4, wherein all the radicals R¹-R⁵ are hydrogen.

6. The process for preparing substituted cyclopentadiene compounds according to any of claims 1 to 4, wherein R¹-R³ are each hydrogen and R⁴ and R⁵ together form a fused-on aromatic ring system.

7. The process for preparing substituted cyclopentadiene compounds according to any of claims 1 to 6, wherein M² is Li.

8. The process for preparing substituted cyclopentadiene compounds according to any of claims 1 to 7, wherein R⁶ is an unsubstituted, substituted or fused, heteroaromatic ring system.

9. The process for preparing substituted cyclopentadiene compounds according to any of claims 1 to 7, wherein R⁶ is an unsubstituted or substituted 8-quinolyl system.

## Revendications

1. Procédé pour la préparation de composés substitués du cyclopentadiène, **caractérisé en ce qu'**il comporte les étapes suivantes :
(A) transformation d'un composé de formule I 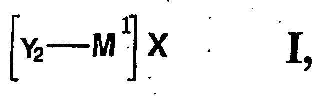 dans laquelle les substituants ont la signification suivante :
M¹ représente Co, Rh ou Ir
X représente fluor, chlore, brome, iode, trifluorosulfonyle, tosyle
Y est identique ou différent et est décrit par la formule générale II suivante 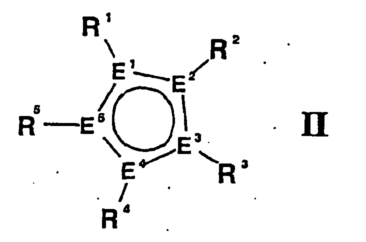
dans laquelle les variables présentent la signification suivante :
E¹-E⁵ carbone ou au maximum une des variables E¹ à E⁵ signifie phosphore
R¹-R⁵, indépendamment l'un de l'autre, hydrogène, alkyle en C₁ à C₂₀, alcényle en C₂ à C₂₀, aryle en C₆ à C₂₀, alkylaryle comprenant 1 à 10 atomes de carbone dans le radical alkyle et 6 à 20 atomes de carbone dans le radical aryle, trialkylsilyle avec trois groupes alkyle en C₁ à C₂₀ indépendants les uns des autres, les radicaux organiques R¹-R⁵ pouvant également être substitués par des halogènes ou des groupes contenant de l'azote, du phosphore, du soufre ou de l'oxygène et à chaque fois deux radicaux R¹-R⁵ géminaux ou vicinaux pouvant également être reliés en un cycle de cinq ou six éléments,
avec un composé M²XₙR⁶_{n-z},
les variables présentant la signification suivante :
R⁶ alkyle en C₁ à C₂₀, alcényle en C₂ à C₂₀, aryle en C₆ à C₂₀, alkylaryle comprenant 1 à 10 atomes de carbone dans le radical alkyle et 6-20 atomes de carbone dans le radical aryle, un trialkylsilyle comprenant trois groupes alkyle en C₁ à C₂₀ indépendants les uns des autres ou un système cyclique non substitué, substitué ou condensé, partiellement insaturé, hétérocyclique ou hétéroaromatique, le radical organique R⁶ pouvant également être substitué par des halogènes, des groupes contenant du soufre, du phosphore, de l'azote ou de l'oxygène,
M² Li, Na, K, Mg, Al, B
n 0, 1 ou 2 et inférieur à z
z un nombre entier qui correspond à l'étage d'oxydation de M²
et
(B) transformation du produit intermédiaire ainsi obtenu avec du chlorure de fer (III).

2. Procédé pour la préparation de composés substitués du cyclopentadiène selon la revendication 1, **caractérisé en ce que** M¹ représente Co.

3. Procédé pour la préparation de composés substitués du cyclopentadiène selon la revendication 1 ou 2, **caractérisé en ce que** les deux Y sont identiques.

4. Procédé pour la préparation de composés substitués du cyclopentadiène selon l'une quelconque des revendications 1 à 3, **caractérisé en ce qu'**au moins un radical R¹-R⁵ représente hydrogène.

5. Procédé pour la préparation de composés substitués du cyclopentadiène selon l'une quelconque des revendications 1 à 4, **caractérisé en ce que** tous les radicaux R¹-R⁵ représentent hydrogène.

6. Procédé pour la préparation de composés substitués du cyclopentadiène selon l'une quelconque des revendications 1 à 4, **caractérisé en ce que** R¹-R³ représentent hydrogène et R⁴ et R⁵ forment ensemble un système cyclique aromatique condensé.

7. Procédé pour la préparation de composés substitués du cyclopentadiène selon l'une quelconque des revendications 1 à 6, **caractérisé en ce que** M² représente Li.

8. Procédé pour la préparation de composés substitués du cyclopentadiène selon l'une quelconque des revendications 1 à 7, **caractérisé en ce que** R⁶ représente un système cyclique non substitué, substitué ou condensé, hétéroaromatique.

9. Procédé pour la préparation de composés substitués du cyclopentadiène selon l'une quelconque des revendications 1 à 7, **caractérisé en ce que** R⁶ représente un système 8-(quinoléyle) non substitué ou substitué.
